# EUROPÄISCHE PATENTSCHRIFT

(11) **EP 3 702 100 B1**
(45) Veröffentlichungstag und Bekanntmachung des Hinweises auf die Patenterteilung: **11.09.2024**
(21) Anmeldenummer: 20154122.4
(22) Anmeldetag: 28.01.2020
(51) Int. Cl.: B23Q 9/00, B27C 5/10, B25H 1/00

(54) **ANSCHLAGVORRICHTUNG**
STOP DEVICE
DISPOSITIF DE BUTÉE

(30) Priorität: 27.02.2019 DE 102019104959
(43) Veröffentlichungstag der Anmeldung: 02.09.2020
(73) Patentinhaber: Mafell AG, 78727 Oberndorf a.N. (DE)
(72) Erfinder: Lunze, Stefan, 78727 Oberndorf am Neckar (DE)
(74) Vertreter: Manitz Finsterwald Patent- und Rechtsanwaltspartnerschaft mbB

(56) Entgegenhaltungen:
- DE-A1- 102010 033 603
- DE-A1- 3 612 214
- DE-A1- 3 706 832
- US-A- 2 943 655

## Beschreibung

Die vorliegende Erfindung betrifft eine Anschlagvorrichtung für eine Bearbeitungsmaschine, insbesondere für eine Oberfräse, mit einem Anschlagabschnitt, der eine Anschlagfläche zum Ansetzen der Anschlagvorrichtung an eine Kante oder Seite eines zu bearbeitenden Werkstücks aufweist, und einem Kopplungsabschnitt zum Koppeln des Anschlagabschnitts mit der Bearbeitungsmaschine. Anschlagvorrichtungen werden im Handwerksbereich beispielsweise dazu verwendet, Bearbeitungsmaschinen wie Oberfräsen, Handkreissägen oder Stichsägen entlang einer vorgegebenen Linie über eine Werkstückoberfläche zu führen, um so zum Beispiel saubere Fräsnuten mit definiertem Verlauf zu erzeugen. Die Anschlagfläche ist vorzugsweise eben, um ein Ansetzen der Anschlagvorrichtung an ebene Werkstückkanten oder Werkstückseiten zu ermöglichen. Der Kopplungsabschnitt kann zur Verbindung mit einer Grundplatte der Bearbeitungsmaschine, insbesondere mit einem Frästisch einer Oberfräse ausgebildet sein. Häufig umfasst der Kopplungsabschnitt einen Ausleger. Eine Anschlagvorrichtung der genannten Art wird auch als "Parallelanschlag" bezeichnet.

Häufig ist es gewünscht, eine Bearbeitungsmaschine mittels einer Führungsschiene auszurichten und zu führen. Anschlagvorrichtungen mit Anschlagflächen sind jedoch nicht für einen Einsatz mit Führungsschienen geeignet. Wenn mit einer Führungsschiene gearbeitet werden soll, werden üblicherweise spezielle Schienenadapter verwendet, die wiederum nicht zum Ansetzen an eine Werkstückkante oder Werkstückseite geeignet sind. Das Mitführen unterschiedlicher Anschlagvorrichtungen sowie das Auswechseln der Anschlagvorrichtungen je nachdem, ob ein Ansetzen an eine Werkstückkante oder Werkstückseite einerseits oder an eine Führungsschiene andererseits gewünscht ist, ist aufwändig und lästig.

Die DE 37 06 832 A1 offenbart eine Anschlagvorrichtung für Elektrowerkzeuge, die einen Kurvenanschlag aufweist. Dieser weist eine wellenförmige Anschlagfläche zum Ansetzen der Anschlagvorrichtung an eine gekrümmte Werkstückkante auf. Weiterhin weist die Anschlagvorrichtung einen Führungsschuh mit Führungsrinnen auf, der bei abgenommenem Kurvenanschlag in einen Eingriff mit einer Führungsschiene gebracht werden kann.

Es ist eine Aufgabe der Erfindung, einen vielseitigeren Einsatz von Anschlagvorrichtungen zu ermöglichen.

Die Lösung der Aufgabe erfolgt durch eine Anschlagvorrichtung mit den Merkmalen des Anspruchs 1.

Ein erfindungsgemäßer Anschlagabschnitt umfasst wenigstens zwei separate Funktionselemente, wobei ein erstes Funktionselement der separaten Funktionselemente für einen Eingriff mit einer Führungsschiene ausgebildet ist und ein zweites Funktionselement der separaten Funktionselemente die Anschlagfläche aufweist. Eine erfindungsgemäße Anschlagvorrichtung ist demgemäß sowohl zum Ansetzen an eine Werkstückkante oder Werkstückseite als auch zum Ansetzen an eine Führungsschiene geeignet. Für den Benutzer einer Bearbeitungsmaschine ist es nicht notwendig, zwei verschiedene Anschlagvorrichtungen mitzuführen und zwischen diesen entsprechend dem Einsatzzweck zu wechseln. Es ist lediglich das jeweils passende Funktionselement auszuwählen. Eine erfindungsgemäße Anschlagvorrichtung ist demgemäß flexibel und vielseitig einsetzbar.

Vorzugsweise ist die Anschlagfläche eben, um ein Ansetzen der Anschlagvorrichtung an ebene Werkstückkanten oder Werkstückseiten zu ermöglichen. Weiterbildungen der Erfindung sind den abhängigen Ansprüchen, der Beschreibung sowie den beigefügten Zeichnungen zu entnehmen.

Der Kopplungsabschnitt umfasst wenigstens ein Kopplungselement, das verschiebbar am Anschlagabschnitt geführt ist, wobei ein an dem Kopplungselement fixierbarer Queranschlag zur Begrenzung der Verschiebebewegung in wenigstens einer Richtung vorgesehen ist. Dies vereinfacht insbesondere Taschenfräsungen. Bevorzugt ist eine Begrenzung der Verschiebebewegung in beiden Richtungen durch jeweilige Queranschläge.

Erfindungsgemäß ist eine Anschlagfläche des Queranschlags verstellbar, insbesondere mittels einer Feinverstellung, wenn der Queranschlag am Kopplungselement fixiert ist. Insbesondere kann der Queranschlag einen Stellring mit Feingewinde umfassen.

Gemäß einer Ausführungsform der Erfindung ist das zweite Funktionselement von dem Anschlagabschnitt abnehmbar, wobei insbesondere das zweite Funktionselement lösbar mit dem ersten Funktionselement koppelbar ist. Bei abgenommenem zweitem Funktionselement kann das erste Funktionselement besonders leicht in Eingriff mit einer Führungsschiene gebracht werden, weil die Anschlagfläche nicht im Weg ist. Mit anderen Worten kann eine erfindungsgemäße Anschlagvorrichtung mit abgenommenem zweiten Funktionselement wie ein Parallelanschlag verwendet werden, der ausschließlich für einen Einsatz mit Führungsschienen vorgesehen ist. Für eine lösbare Kopplung des ersten Funktionselements und des zweiten Funktionselements kann eine Steckverbindung und/oder eine Schraubverbindung vorgesehen sein. Beispielsweise kann das zweite Funktionselement mittels werkzeuglos betätigbarer Schrauben wie Rändelschrauben oder Flügelschrauben bzw. entsprechender Muttern an dem ersten Funktionselement anschraubbar sein. Grundsätzlich könnte das zweite Funktionselement auch unabhängig von dem ersten Funktionselement an einem Basisabschnitt des Anschlagabschnitts angebracht und von diesem Basisabschnitt abnehmbar sein.

Vorzugsweise steht der Kopplungsabschnitt ausschließlich über das erste Funktionselement mit dem Anschlagabschnitt in Verbindung. Dies bewirkt eine vereinfachte Konstruktion, da keine Verbindung zwischen dem Kopplungsabschnitt und dem zweiten Funktionselement erforderlich ist.

Gemäß einer weiteren Ausführungsform der Erfindung weist das zweite Funktionselement einen flächigen Grundkörper aus Metall oder Kunststoff auf. Dies ermöglicht eine besonders einfache und kostengünstige Fertigung. Das zweite Funktionselement kann im Prinzip vollständig durch den flächigen Grundkörper aus Metall gebildet sein. Bevorzugt ist jedoch wenigstens eine Anschlagbacke oder ein anderes Anschlagelement an dem flächigen Grundkörper angebracht. Diese bzw. dieses muss nicht notwendigerweise aus Metall gefertigt sein. Die Anschlagfläche kann an der Anschlagbacke bzw. dem Anschlagelement ausgebildet sein. Eine derartige Anschlagbacke bzw. ein derartiges Anschlagelement kann lösbar und/oder verstellbar am flächigen Grundkörper angebracht sein.

Bevorzugt umfasst das zweite Funktionselement ein den flächigen Grundkörper aufweisendes Biegeteil aus Blech. Dies ermöglicht eine besonders kostengünstige Herstellung. Das Biegeteil kann gestanzt oder laserzugeschnitten sein.

Eine weitere Ausführungsform der Erfindung sieht vor, dass an einer Unterseite des ersten Funktionselements wenigstens ein Führungsprofil, insbesondere eine Führungsnut, zur Koppelung mit einem Führungsprofil, insbesondere mit einem Führungssteg, der Führungsschiene ausgebildet ist. Aufgrund des Profileingriffs ist bei dieser Ausgestaltung ein besonders sauberes und sicheres Führen der Bearbeitungsmaschine entlang der Führungsschiene möglich. Vorzugsweise weist das Führungsprofil des ersten Funktionselements einen geradlinigen Verlauf auf. Es können auch mehrere, insbesondere parallel verlaufende Führungsprofile am ersten Funktionselement vorgesehen sein, die an unterschiedliche Führungsschienen angepasst sind. Ein Benutzer kann dann je nach verwendeter Führungsschiene das passende Führungsprofil auswählen. Um eine Fehlbedienung auszuschließen, kann eine nicht zu verwendende Führungsnut verschlossen werden. Somit kann das erste Funktionselement nicht mit einem falschen Führungssteg der Führungsschiene in Eingriff gelangen.

Gemäß einer speziellen Ausgestaltung weist der Anschlagabschnitt eine Zirkelfunktion auf. Somit kann die Anschlagvorrichtung auch zum Durchführen von Kreisfräsungen verwendet werden.

Für die Zirkelfunktion kann ein Zirkelelement an dem ersten Funktionselement oder an dem zweiten Funktionselement angeordnet sein. Dieses kann z. B. wie eine Zirkelspitze in ein Loch gesteckt werden. Das Zirkelelement kann einen Stift, Schaft oder Bolzen umfassen.

Vorzugsweise ist das Zirkelelement lösbar mit dem ersten Funktionselement oder mit dem zweiten Funktionselement koppelbar und/oder zwischen einer eingefahrenen Ruhestellung und einer ausgefahrenen Funktionsstellung verstellbar, insbesondere längsverstellbar. Das Zirkelelement kann mittels eines Federelements in die ausgefahrene Stellung vorgespannt sein. In der eingefahrenen Stellung kann das Zirkelelement arretierbar sein.

Gemäß einer weiteren Ausgestaltung weist das Zirkelelement einen, insbesondere zylindrischen, Steckabschnitt auf, der zum Einstecken in Ausnehmungen der Führungsschiene ausgebildet ist. Ein Einstecken des Steckabschnitts in voneinander beabstandete Ausnehmungen erleichtert zum Beispiel das Fräsen gemäß einem vorgegebenen Rastermaß.

Die Erfindung betrifft auch eine Anordnung mit einer wie vorstehend beschriebenen Anschlagvorrichtung, einer für einen Eingriff mit dem ersten Funktionselement ausgebildeten Führungsschiene und wenigstens einem Schienenanschlag, der zur Befestigung an einer Unterseite der Führungsschiene ausgebildet ist und eine Anschlagfläche zum Ansetzen der Führungsschiene an eine Kante oder Seite des zu bearbeitenden Werkstücks aufweist. Durch den Schienenanschlag kann die Stellung der Führungsschiene relativ zur Werkstückkante festgelegt werden.

Es kann auch wenigstens ein Längsanschlag vorgesehen sein, der zur Befestigung an einer Oberseite der Führungsschiene ausgebildet ist und eine Anschlagfläche zur Begrenzung einer durch die Führungsschiene geführten Bewegung des Anschlagabschnitts aufweist. Dadurch kann die Bewegung der Bearbeitungsmaschine in Führungsrichtung begrenzt werden, beispielsweise für Taschenfräsungen.

Die Anschlagfläche des Längsanschlags kann mit einer Gegenfläche des Anschlagabschnitts zusammenwirken, die relativ zu dem Kopplungsabschnitt verstellbar ist, vorzugsweise mittels einer Feinverstellung. Insbesondere kann ein Stellring mit Feingewinde am Anschlagabschnitt vorgesehen sein.

Die Erfindung wird nachfolgend beispielhaft unter Bezugnahme auf die Zeichnung beschrieben.
- Fig. 1: ist eine perspektivische Ansicht einer erfindungsgemäßen Anschlagvorrichtung, die mit einer Oberfräse gekoppelt und an eine Werkstückkante angesetzt ist.
- Fig. 2: ist eine Draufsicht auf die in Fig. 1 gezeigte Anschlagvorrichtung.
- Fig. 3: ist eine Seitenansicht der Anschlagvorrichtung gemäß Fig. 2.
- Fig. 4: ist eine Draufsicht auf eine erfindungsgemäße Anschlagvorrichtung mit einem abgenommenen Funktionselement.
- Fig. 5: ist eine Draufsicht auf die in Fig. 4 gezeigte Anschlagvorrichtung, wobei diese mit einer Oberfräse gekoppelt und auf eine Führungsschiene aufgesetzt ist.
- Fig. 6: ist eine perspektivische Darstellung der in Fig. 5 gezeigten Anordnung.

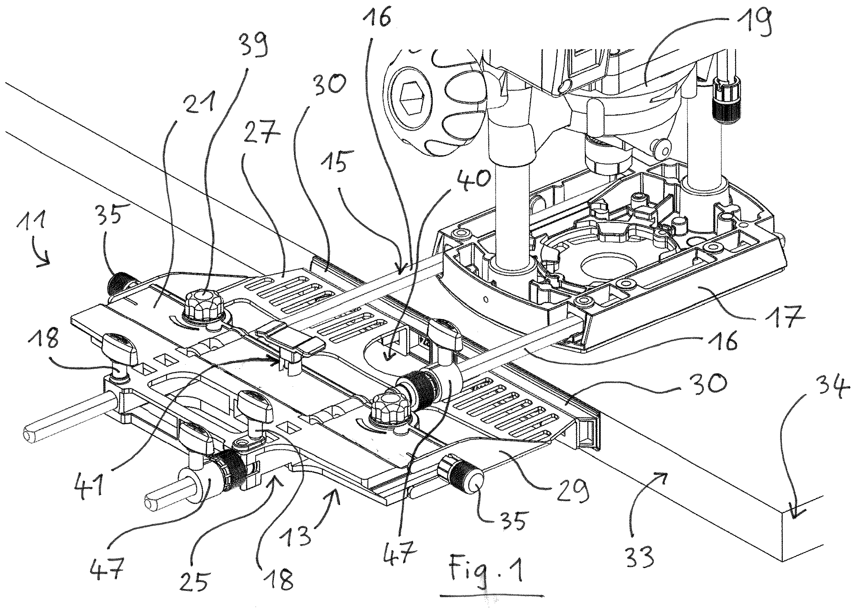

Die in Fig. 1 bis 3 gezeigte erfindungsgemäße Anschlagvorrichtung 11 weist einen Anschlagabschnitt 13 auf, der mittels eines Kopplungsabschnitts 15 mit dem Frästisch 17 einer in Fig. 1 lediglich teilweise dargestellten Oberfräse 19 koppelbar ist. Bei dem dargestellten Ausführungsbeispiel ist der Kopplungsabschnitt 15 in grundsätzlich bekannter Weise durch einen verstellbaren Ausleger gebildet. Wie gezeigt umfasst der Kopplungsabschnitt 15 zwei parallele Kopplungsstangen 16, die in jeweiligen Aufnahmen des Frästischs 17 und des Anschlagabschnitts 13 sitzen. Mittels jeweiliger Feststellschrauben 18 können die verschiebbar im Anschlagabschnitt 13 geführten Kopplungsstangen 16 fixiert werden, um eine gewünschte konstante Auslegerlänge vorzugeben.

Der Anschlagabschnitt 13 weist ein erstes Funktionselement 21 auf, über welches der Anschlagabschnitt 13 mit dem Kopplungsabschnitt 15 in Verbindung steht. Das erste Funktionselement 21 kann zumindest im Wesentlichen aus Kunststoff gefertigt sein. An der Unterseite 23 des ersten Funktionselements 21 sind zwei Führungsnuten 25 ausgebildet. In die Führungsnuten 25 kann jeweils der Führungssteg einer in den Fig. 1 bis 3 nicht dargestellten Führungsschiene eingreifen.

Der Anschlagabschnitt 13 weist ein von dem ersten Funktionselement 21 separates zweites Funktionselement 27 auf, das einen flächigen Grundkörper 29 aus Metall sowie zwei Anschlagbacken 30 umfasst. Der flächige Grundkörper 29 ist vorzugsweise als Biegeteil aus Blech ausgeführt. An den beiden Anschlagbacken 30 sind jeweilige ebene Anschlagflächen 31 ausgebildet, die ein Ansetzen des Anschlagabschnitts 13 an die Kante 33 (Fig. 1) eines zu bearbeitenden Werkstücks 34 ermöglichen. Die Oberfräse 19 kann mit montierter Anschlagvorrichtung 11 wie in Fig. 1 dargestellt entlang der Kante 33 geführt werden, um so ein geradliniges Fräsbild, insbesondere eine geradlinige Falz, Nut oder Tasche, zu erzeugen.

Das zweite Funktionselement 27 ist mittels zweier handbetätigbarer Klemmschrauben 35 am ersten Funktionselement 21 befestigt. Nach einem Lösen der Klemmschrauben 35 kann das zweite Funktionselement 27 vom ersten Funktionselement 21 und somit vom Anschlagabschnitt 13 abgenommen und beiseite gelegt werden.

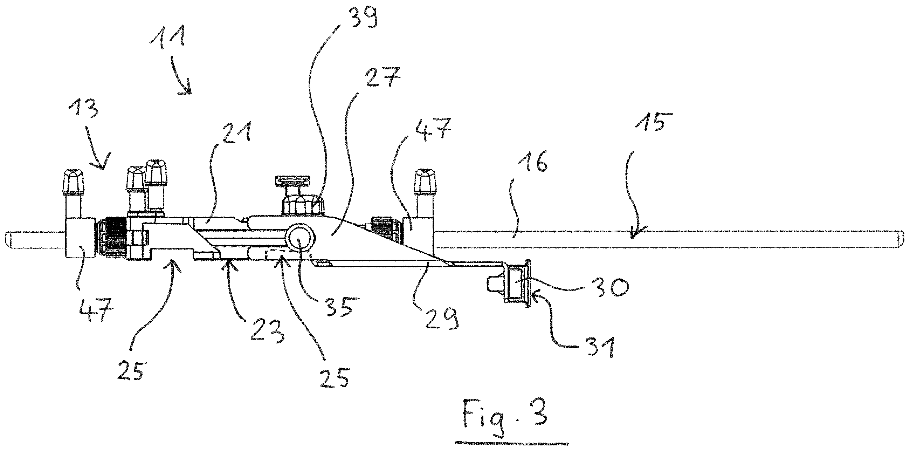

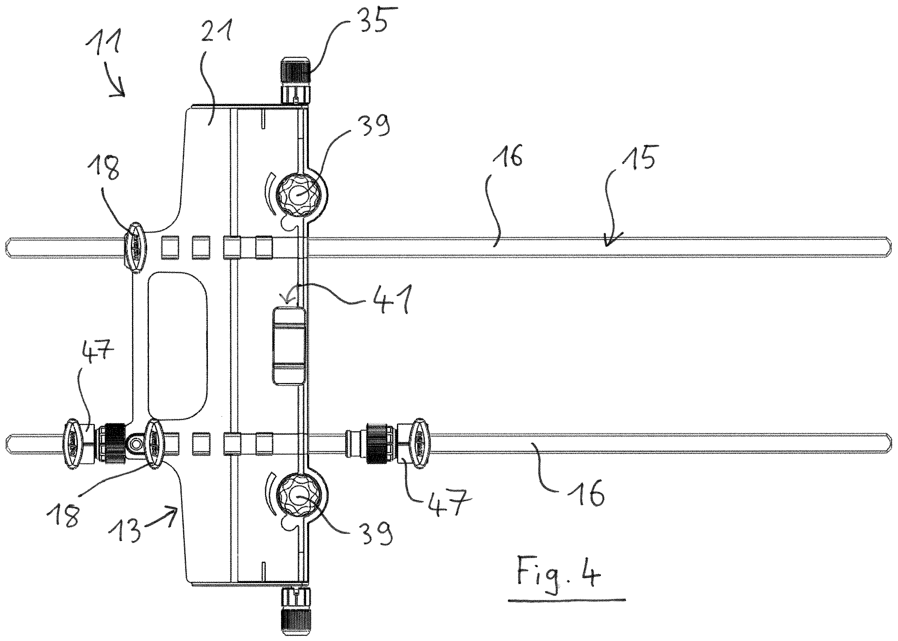

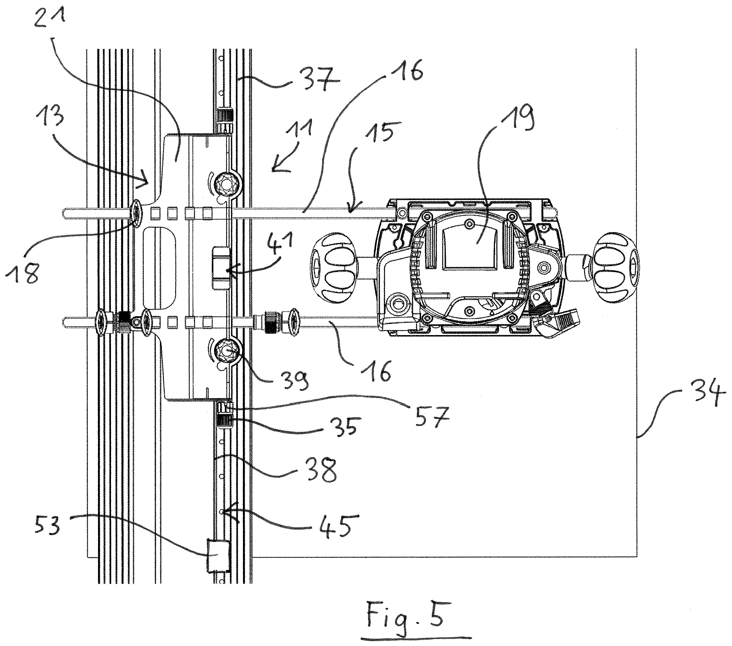

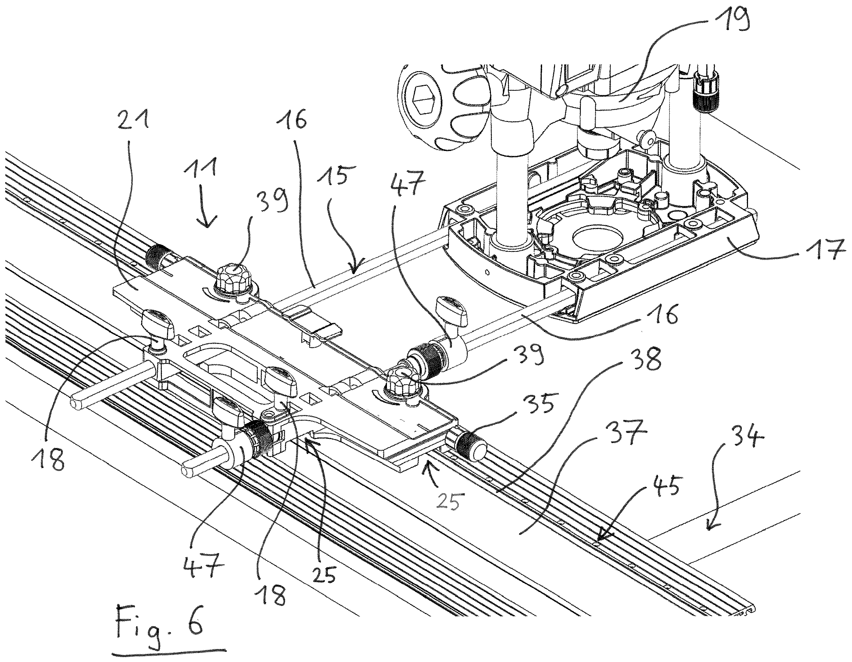

Die Fig. 3 bis 6 zeigen die erfindungsgemäße Anschlagvorrichtung 11 mit abgenommenem zweitem Funktionselement. In diesem Funktionszustand kann die Anschlagvorrichtung 11 mit einer in Fig. 5 und 6 dargestellten Führungsschiene 37 verwendet werden. Das erste Funktionselement 21 wird hierbei auf die Führungsschiene 37 aufgesetzt und an dieser entlang geführt. Hierbei greift ein Führungssteg 38 der Führungsschiene 37 in eine der Führungsnuten 25 ein. Da das zweite Funktionselement 27 abgenommen ist, stört es nicht bei der Führung des Anschlagabschnitts 13 entlang der Führungsschiene 37. Für einen Wechsel des Anschlagabschnitts 13 zwischen dem zum Ansetzen an die Kante 33 eines Werkstücks 34 geeigneten Funktionszustand gemäß Fig. 1 und dem für das Aufsetzen auf eine Führungsschiene 37 geeigneten Funktionszustand gemäß Fig. 6 ist lediglich ein Lösen bzw. Festziehen der Klemmschrauben 35 erforderlich.

An der Führungsschiene 37 können Längsanschläge 53 (Fig. 5) angebracht werden, beispielsweise durch Aufstecken und Festklemmen. Diese begrenzen den Verfahrweg des des Anschlagabschnitts 13 auf der Führungsschiene 37. Eine Feineinstellung des Verfahrwegs ist durch Drehen der Klemmschrauben 35 möglich. Bei diesen entspricht eine Umdrehung einem Millimeter Stellweg. Zusätzlich ist eine Zehnerunterteilung einer Umdrehung durch eine Skala 57 kenntlich gemacht.

Das erste Funktionselement 21 kann an unterschiedliche Typen von Führungsschienen 37 anpassbar sein. Zu diesem Zweck kann beispielsweise eine nicht dargestellte Abdeckung vorgesehen sein, mittels welcher eine der Führungsnuten 25 verschließbar ist. Eine solche Abdeckung könnte zum Beispiel am ersten Funktionselement 21 anschraubbar oder anclipsbar sein. Weiterhin kann die Breite und/oder die Lage der Führungsnut 25 veränderbar sein, beispielsweise durch Betätigung von Einstellrädern 39.

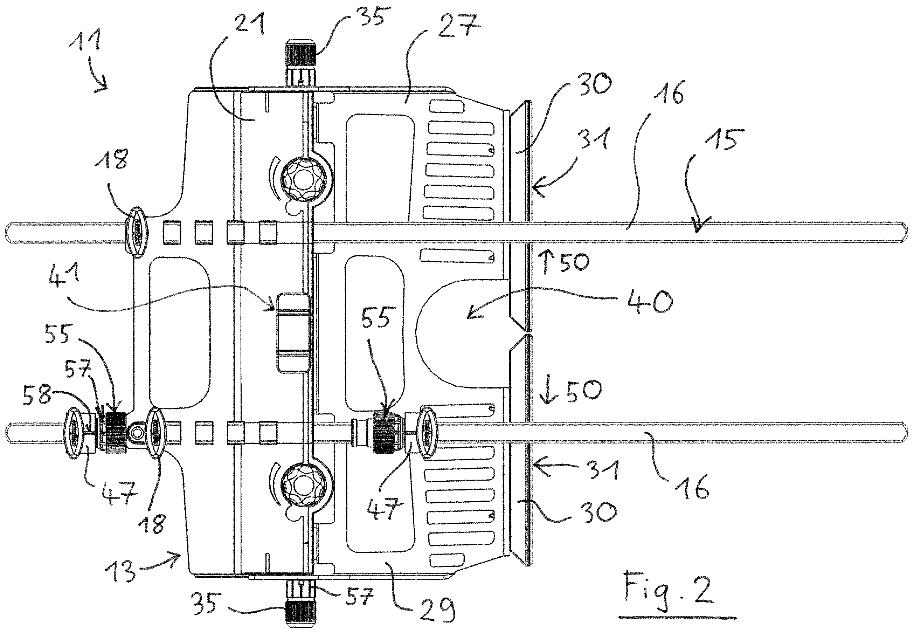

Wie in Fig. 1 und 2 erkennbar ist, weist das zweite Funktionselement 27 eine neben den Anschlagbacken 30 befindliche Aussparung 40 auf. Durch diese Aussparung 40 kann bei Bedarf das nicht dargestellte Fräswerkzeug durchgeführt werden, um dieses von außen parallel an der Kante 33 des Werkstücks 34 entlang zu führen. Um in dieser Betriebsart einen Eingriff des Fräswerkzeugs mit dem Werkstück 34 zu ermöglichen, sind die Anschlagbacken 30 verstellbar, so dass sie bei Bedarf auseinander bewegt werden können. Dies ist in Fig. 2 durch die Pfeile 50 angegeben. Beispielsweise können die Anschlagbacken 30 in unterschiedlichen Stellungen in den flächigen Grundkörper 29 einsteckbar sein. Vorzugsweise sind die Anschlagbacken 30 mit exzentrisch angeordneten Steckelementen versehen. Durch Drehen der Anschlagbacken 30 um 180° kann somit ihre Stellung relativ zum Grundkörper 29 geändert werden.

Der Anschlagabschnitt 13 umfasst ferner ein Zirkelelement 41, das in das erste Funktionselement 21 eingesetzt ist. Das Zirkelelement 41 umfasst einen in den Figuren nicht sichtbaren Stift, der zwischen einer eingefahrenen und einer ausgefahrenen Stellung längsverstellbar ist und mittels eines Federelements in die ausgefahrene Stellung vorgespannt ist. In der eingefahrenen Stellung ist der Stift arretierbar. Durch Drehen des Zirkelelements 41 um 90° kann die Arretierung gelöst und der Stift nach unten ausgefahren werden. In der ausgefahrenen Stellung kann er wie eine Zirkelspitze in ein vorgesehenes, beispielsweise vorgebohrtes Loch gesteckt werden, um Kreisfräsungen auszuführen. Die Größe des Kreises ist hierbei über die Kopplungsstangen 16 und die Feststellschrauben 18 stufenlos einstellbar.

Ferner kann ein nicht dargestellter, vorzugsweise aus Kunststoff gefertigter Lochreihenanschlag vorgesehen sein, der an der Unterseite einer Führungsschiene 37 fixiert werden kann. Ein solcher Lochreihenanschlag definiert ein vorgegebenes Achsabstandsmaß zum ersten Loch einer Lochreihe 45 (Fig. 5) der Führungsschiene 37. Beispielsweise kann der Abstand vom ersten Loch zur Außenkante die Hälfte einer Standardplatte betragen. Dies ist insbesondere beim Fräsen gemäß einem vorgegebenen Rastermaß von Vorteil. Der Stift des Zirkelelements 41 kann zu diesem Zweck nacheinander in verschiedene Löcher der Lochreihe 45 eingesteckt werden. Die Stellung des Anschlagabschnitts 13 relativ zur Führungsschiene 37 ist dann durch den Stift des Zirkelelements 41 festgelegt, während die Stellung der Führungsschiene 37 relativ zur Kante 33 durch den von unten aufgesteckten Lochreihenanschlag festgelegt ist.

Am Kopplungsabschnitt 15 sind ferner verstellbare Klemmanschläge 47 vorgesehen, die eine definierte Verstellung der Oberfräse 19 quer zur Kante 33 ermöglichen und zur Erleichterung von Taschenfräsungen vorgesehen sind. Solche Taschenfräsungen können bei gelösten Feststellschrauben 18 und fixierten Klemmanschlägen 47 vorgenommen werden, wobei die Taschengröße in Querrichtung durch den Abstand der Klemmanschläge 47 definiert ist. Die Klemmanschläge 47 sind mit jeweiligen Einstellvorrichtungen 55 versehen, mittels welcher die Taschenbreite exakt auf ein vorgegebenes Maß eingestellt werden kann. Die Einstellvorrichtungen 55 umfassen Stellringe, bei welchen eine Umdrehung einem Millimeter Stellweg entspricht. Zusätzlich ist eine Zehnerunterteilung einer Umdrehung durch eine Skala 57 mit Ablesekante 58 kenntlich gemacht.

Die Erfindung erleichtert die Handhabung von Oberfräsen 19 und anderen Bearbeitungsmaschinen ohne Einsatz aufwändiger Mittel.

### Bezugszeichenliste

- 11: Anschlagvorrichtung
- 13: Anschlagabschnitt
- 15: Kopplungsabschnitt
- 16: Kopplungsstange
- 17: Frästisch
- 18: Feststellschraube
- 19: Oberfräse
- 21: erstes Funktionselement
- 23: Unterseite
- 25: Führungsnut
- 27: zweites Funktionselement
- 29: flächiger Grundkörper
- 30: Anschlagbacke
- 31: Anschlagfläche
- 33: Kante
- 34: Werkstück
- 35: Klemmschraube
- 37: Führungsschiene
- 38: Führungssteg
- 39: Einstellrad
- 40: Aussparung
- 41: Zirkelelement
- 45: Lochreihe
- 47: Klemmanschlag
- 50: Bewegungsrichtung
- 53: Längsanschlag
- 55: Einstellvorrichtung
- 57: Skala
- 58: Ablesekante

## Patentansprüche

1. Anschlagvorrichtung (11) für eine Bearbeitungsmaschine (19), insbesondere für eine Oberfräse, mit einem Anschlagabschnitt (13), der eine Anschlagfläche (31) zum Ansetzen der Anschlagvorrichtung (11) an eine Kante (33) oder Seite eines zu bearbeitenden Werkstücks (34) aufweist, und einem Kopplungsabschnitt (15) zum Koppeln des Anschlagabschnitts (13) mit der Bearbeitungsmaschine (19), wobei
der Anschlagabschnitt (13) wenigstens zwei separate Funktionselemente (21, 27) umfasst, wobei ein erstes Funktionselement (21) der separaten Funktionselemente für einen Eingriff mit einer Führungsschiene (37) ausgebildet ist und ein zweites Funktionselement (27) der separaten Funktionselemente die Anschlagfläche (31) aufweist,
wobei der Kopplungsabschnitt (15) wenigstens ein Kopplungselement (16) umfasst, das verschiebbar am Anschlagabschnitt (13) geführt ist,
**dadurch geknzeichnet**, dass
ein an dem Kopplungselement (16) fixierbarer Queranschlag (47) zur Begrenzung der Verschiebebewegung in wenigstens einer Richtung vorgesehen ist,
wobei eine Anschlagfläche des Queranschlags (47) verstellbar ist, insbesondere mittels einer Feinverstellung, wenn der Queranschlag (47) am Kopplungselement (16) fixiert ist.

2. Anschlagvorrichtung nach Anspruch 1,
**dadurch gekennzeichnet, dass**
das zweite Funktionselement (27) von dem Anschlagabschnitt (13) abnehmbar ist, wobei insbesondere das zweite Funktionselement (27) lösbar mit dem ersten Funktionselement (21) koppelbar ist.

3. Anschlagvorrichtung nach Anspruch 1 oder 2,
**dadurch gekennzeichnet, dass**
der Kopplungsabschnitt (15) ausschließlich über das erste Funktionselement (21) mit dem Anschlagabschnitt (13) in Verbindung steht.

4. Anschlagvorrichtung nach zumindest einem der vorstehenden Ansprüche, **dadurch gekennzeichnet, dass**
das zweite Funktionselement (27) einen flächigen Grundkörper (29) aus Metall oder Kunststoff aufweist.

5. Anschlagvorrichtung nach Anspruch 4,
**dadurch gekennzeichnet, dass**
das zweite Funktionselement (27) ein den flächigen Grundkörper (29) aufweisendes Biegeteil aus Blech umfasst.

6. Anschlagvorrichtung nach zumindest einem der vorstehenden Ansprüche, **dadurch gekennzeichnet, dass**
an einer Unterseite (23) des ersten Funktionselements (21) wenigstens ein Führungsprofil (25), insbesondere eine Führungsnut, zur Koppelung mit einem Führungsprofil (38), insbesondere mit einem Führungssteg, der Führungsschiene (37) ausgebildet ist.

7. Anschlagvorrichtung nach zumindest einem der vorstehenden Ansprüche, **dadurchgekennzeichnet**, dass
der Anschlagabschnitt (13) eine Zirkelfunktion aufweist.

8. Anschlagvorrichtung nach Anspruch 7,
**dadurch gekennzeichnet, dass**
für die Zirkelfunktion ein Zirkelelement (41) an dem ersten Funktionselement (21) oder an dem zweiten Funktionselement (27) angeordnet ist, insbesondere wobei das Zirkelelement (41) lösbar mit dem ersten Funktionselement (21) oder mit dem zweiten Funktionselement (27) koppelbar ist und/oder zwischen einer eingefahrenen Ruhestellung und einer ausgefahrenen Funktionsstellung verstellbar ist.

9. Anschlagvorrichtung nach Anspruch 8,
**dadurch gekennzeichnet, dass**
das Zirkelelement (41) einen, insbesondere zylindrischen, Steckabschnitt aufweist, der zum Einstecken in Ausnehmungen (45) der Führungsschiene (37) ausgebildet ist.

10. Anordnung mit einer Anschlagvorrichtung nach zumindest einem der vorstehenden Ansprüche und einer für einen Eingriff mit dem ersten Funktionselement (21) ausgebildeten Führungsschiene (37),
**gekennzeichnet durch**
wenigstens einen Schienenanschlag, der zur Befestigung an einer Unterseite der Führungsschiene (37) ausgebildet ist und eine Anschlagfläche zum Ansetzen der Führungsschiene (37) an eine Kante (33) oder Seite des zu bearbeitenden Werkstücks (34) aufweist.

11. Anordnung, insbesondere nach Anspruch 10, mit einer Anschlagvorrichtung nach zumindest einem der Ansprüche 1 bis 9 und einer für einen Eingriff mit dem ersten Funktionselement (21) ausgebildeten Führungsschiene (37),
**gekennzeichnet durch**
wenigstens einen Längsanschlag (53), der zur Befestigung an einer Oberseite der Führungsschiene (37) ausgebildet ist und eine Anschlagfläche zur Begrenzung einer durch die Führungsschiene (37) geführten Bewegung des Anschlagabschnitts (13) aufweist.

12. Anschlagvorrichtung nach Anspruch 11,
**dadurch gekennzeichnet, dass** die Anschlagfläche des Längsanschlags (53) mit einer Gegenfläche des Anschlagabschnitts (13) zusammenwirkt, die relativ zu dem Kopplungsabschnitt (15) verstellbar ist, vorzugsweise mittels einer Feinverstellung.

## Claims

1. A stop apparatus (11) for a processing machine (19), in particular for a router, comprising a stop section (13), which has a stop surface (31) for placing the stop apparatus (11) against an edge (33) or a side of a workpiece (34) to be processed, and a coupling section (15) for coupling the stop section (13) to the processing machine (19), wherein
the stop section (13) comprises at least two separate functional elements (21, 27), wherein a first functional element (21) of the separate functional elements is configured for an engagement with a guide rail (37) and a second functional element (27) of the separate functional elements has the stop surface (31),
wherein the coupling section (15) comprises at least one coupling element (16) which is displaceably guided at the stop section (13),
**characterized in that**
a transverse stop (47) which can be fixed to the coupling element (16) is provided to limit the displacement movement in at least one direction, wherein a stop surface of the transverse stop (47) is adjustable, in particular by means of a fine adjustment, when the transverse stop (47) is fixed to the coupling element (16).

2. A stop apparatus according to claim 1,
**characterized in that**
the second functional element (27) can be removed from the stop section (13), with in particular the second functional element (27) being releasably couplable to the first functional element (21).

3. A stop apparatus according to claim 1 or 2,
**characterized in that**
the coupling section (15) is connected to the stop section (13) solely via the first functional element (21).

4. A stop apparatus according to at least one of the preceding claims, **characterized in that**
the second functional element (27) has an areal base body (29) made of metal or plastic.

5. A stop apparatus according to claim 4,
**characterized in that**
the second functional element (27) comprises a bent part composed of sheet metal that has the areal base body (29).

6. A stop apparatus according to at least one of the preceding claims, **characterized in that**
at least one guide profile (25), in particular a guide groove, for coupling to a guide profile (38), in particular to a guide web, of the guide rail (37) is formed at a lower side (23) of the first functional element (21).

7. A stop apparatus according to at least one of the preceding claims, **characterized in that**
the stop section (13) has a circle function.

8. A stop apparatus according to claim 7,
**characterized in that**,
for the circle function, a circular element (41) is arranged at the first functional element (21) or at the second functional element (27), in particular with the circular element (41) being releasably couplable to the first functional element (21) or to the second functional element (27) and/or being adjustable between a retracted position of rest and an extended functional position.

9. A stop apparatus according to claim 8,
**characterized in that**
the circular element (41) has a plug-in section, in particular a cylindrical plug-in section, which is configured for insertion into recesses (45) of the guide rail (37).

10. An arrangement comprising a stop apparatus according to at least one of the preceding claims and a guide rail (37) configured for an engagement with the first functional element (21),
**characterized by**
at least one rail stop which is configured for fastening to a lower side of the guide rail (37) and which has a stop surface for placing the guide rail (37) against an edge (33) or a side of the workpiece (34) to be processed.

11. An arrangement, in particular according to claim 10, comprising a stop apparatus according to at least one of the claims 1 to 9 and a guide rail (37) configured for engagement with the first functional element (21), **characterized by**
at least one longitudinal stop (53) which is configured for fastening to an upper side of the guide rail (37) and which has a stop surface for limiting a movement of the stop section (13) guided by the guide rail (37).

12. A stop arrangement according to claim 11,
**characterized in that**
the stop surface of the longitudinal stop (53) cooperates with a counter surface of the stop section (13), said counter surface being adjustable relative to the coupling section (15), preferably by means of a fine adjustment.

## Revendications

1. Dispositif de butée (11) pour une machine d'usinage (19), en particulier pour une défonceuse, comprenant une portion de butée (13) qui présente une surface de butée (31) pour appliquer le dispositif de butée (11) contre une arête (33) ou une face d'une pièce à usiner (34), et une portion d'accouplement (15) pour accoupler la portion de butée (13) à la machine d'usinage (19),
dans lequel
la portion de butée (13) comprend au moins deux éléments fonctionnels séparés (21, 27), un premier élément fonctionnel (21) des éléments fonctionnels séparés étant conçu pour s'engager avec un rail de guidage (37) et un deuxième élément fonctionnel (27) des éléments fonctionnels séparés comprenant la surface de butée (31),
la portion d'accouplement (15) comprend au moins un élément d'accouplement (16) qui est guidé de manière coulissante sur la portion de butée (13), **caractérisé en ce que**
il est prévu une butée transversale (47) apte à être fixée à l'élément d'accouplement (16) pour limiter le mouvement de coulissement dans au moins une direction,
une surface de butée de la butée transversale (47) étant réglable, en particulier au moyen d'un réglage fin, lorsque la butée transversale (47) est fixée à l'élément d'accouplement (16).

2. Dispositif de butée selon la revendication 1,
**caractérisé en ce que**
le deuxième élément fonctionnel (27) peut être retiré de la portion de butée (13), le deuxième élément fonctionnel (27) pouvant en particulier être accouplé de manière amovible au premier élément fonctionnel (21).

3. Dispositif de butée selon la revendication 1 ou 2,
**caractérisé en ce que**
la portion d'accouplement (15) est en liaison avec la portion de butée (13) exclusivement par l'intermédiaire du premier élément fonctionnel (21).

4. Dispositif de butée selon l'une au moins des revendications précédentes, **caractérisé en ce que**
le deuxième élément fonctionnel (27) présente un corps de base plat (29) en métal ou en matière plastique.

5. Dispositif de butée selon la revendication 4,
**caractérisé en ce que**
le deuxième élément fonctionnel (27) comprend une pièce pliée en tôle présentant le corps de base plat (29).

6. Dispositif de butée selon l'une au moins des revendications précédentes, **caractérisé en ce que**
sur une face inférieure (23) du premier élément fonctionnel (21) est formé au moins un profil de guidage (25), en particulier une rainure de guidage, destiné(e) à être accouplé(e) à un profil de guidage (38), en particulier à une âme de guidage, du rail de guidage (37).

7. Dispositif de butée selon l'une au moins des revendications précédentes, **caractérisé en ce que**
la portion de butée (13) présente une fonction de compas.

8. Dispositif de butée selon la revendication 7,
**caractérisé en ce que**
pour la fonction de compas, un élément de compas (41) est disposé sur le premier élément fonctionnel (21) ou sur le deuxième élément fonctionnel (27), en particulier l'élément de compas (41) pouvant être accouplé de manière amovible au premier élément fonctionnel (21) ou au deuxième élément fonctionnel (27) et/ou pouvant être réglé entre une position de repos rétractée et une position de fonctionnement déployée.

9. Dispositif de butée selon la revendication 8,
**caractérisé en ce que**
l'élément de compas (41) présente une portion d'enfichage, en particulier cylindrique, qui est conçue pour être enfichée dans des évidements (45) du rail de guidage (37).

10. Ensemble comprenant un dispositif de butée selon l'une au moins des revendications précédentes et un rail de guidage (37) conçu pour s'engager avec le premier élément fonctionnel (21),
**caractérisé par**
au moins une butée de rail conçue pour être fixée à une face inférieure du rail de guidage (37) et présentant une surface de butée pour appliquer le rail de guidage (37) contre une arête (33) ou une face de la pièce à usiner (34).

11. Ensemble, en particulier selon la revendication 10, comprenant un dispositif de butée selon l'une au moins des revendications 1 à 9 et un rail de guidage (37) conçu pour s'engager avec le premier élément fonctionnel (21), **caractérisé par**
au moins une butée longitudinale (53) conçue pour être fixée à une face supérieure du rail de guidage (37) et présentant une surface de butée pour limiter un mouvement de la portion de butée (13) guidé par le rail de guidage (37).

12. Dispositif de butée selon la revendication 11,
**caractérisé en ce que**
la surface de butée de la butée longitudinale (53) coopère avec une contre-surface de la portion de butée (13) qui est réglable par rapport à la portion d'accouplement (15), de préférence au moyen d'un réglage fin.
